# EUROPEAN PATENT APPLICATION

(11) **EP 4 679 346 A1**
(43) Date of publication of application: **14.01.2026**
(21) Application number: 24188477.4
(22) Date of filing: 12.07.2024
(51) Int. Cl.: G06Q 20/04, G06Q 20/16, G06Q 20/18, G06Q 20/20, G06Q 20/32, G06Q 20/38, G06Q 20/42, H04W 8/00, H04W 8/20

(54) **VALIDATION OF USER INFORMATION IN A DISTRIBUTED SYSTEM**

(71) Applicant: Mastercard International Incorporated, Purchase, NY 10577 (US)
(72) Inventor: BAGHIROV, Imran, AZ1121 Baku (AZ)
(74) Representative: Keltie LLP

(57) **Abstract**

There are described herein computer-implemented systems and methods for providing access for a user to a digital asset and/or service from a service provider. The method is performed by a financial institution and comprises receiving, from a payment processing device, a transaction request indicative of the user requesting access to the digital asset and/or service. The method also comprises providing, to the user, a first accessible link associated with a digital credential which is configured to enable access to the digital asset and/or service when activated; and receiving, from the service provider (following access of the first link by the user), a user validation request comprising identifying information of the user. The identifying information was obtained by the service provider following access of the first link by the user. The method also comprises providing, to the service provider, a validation result, based on a comparison of the received identifying information with stored user information, to enable the service provider to determine whether to activate the digital credential and enable access to the digital asset and/or service.

## Description

### Field of Disclosure

The present disclosure relates to the validation of user information in a distributed system, and more particularly to the validation of user information in the context of providing access to telecommunication services. Aspects of the disclosure relate to a system and method for implementing the disclosure.

### Background to Disclosure

An increasing number of users are now making use of digital SIM cards (or 'eSIMs'), which are installed on their mobile (phone) devices by the telecommunications providers and can be utilised by the user as desired.

At present various mechanisms exist for installing and activating an eSIM on a user's mobile device. These include the download of an eSIM via an application provided by the telecommunications provider and installed on the mobile device; or the scanning of an identification code issued by the telecommunications provider that prompts the installation or activation of the eSIM on the mobile device.

It is not always easy or possible for a user to initiate and follow the procedures for installing and activating an eSIM on their mobile device. For example, travellers arriving in a new country or geographical location may wish to obtain a SIM card that functions locally from a trusted provider. However, they may encounter difficulties in doing so, either physically (if the location is remote and/or the time of arrival is not during working hours) or electronically (if access to the internet or mobile data is restricted).

The activation of eSIMs also requires the telecommunications provider to undertake user verification and authentication procedures prior to allowing access to the eSIMs by the user. Such procedures can place a processing burden on the telecommunications providers, and/or take require an extended period of time to complete, which is again undesirable from a user's point of view.

The present disclosure has been devised to address one or more of the disadvantages describe above.

### Summary of Disclosure

In a first aspect, the disclosure provides a computer implemented method of providing access for a user to a digital asset and/or service from a service provider. The method is performed by a financial institution and comprises receiving, from a payment processing device, a transaction request indicative of the user requesting access to the digital asset and/or service. The method also comprises providing, to the user, a first accessible link associated with a digital credential which is configured to enable access to the digital asset and/or service when activated; and receiving, from the service provider (following access of the first link by the user), a user validation request comprising identifying information of the user. The identifying information was obtained by the service provider following access of the first link by the user. The method also comprises providing, to the service provider, a validation result, based on a comparison of the received identifying information with stored user information, to enable the service provider to determine whether to activate the digital credential and enable access to the digital asset and/or service.

Benefits associated with the above-described method are twofold. Firstly, the mechanism by which the user can obtain access to the desired digital assets and/or services is simplified - i.e., simply by interacting with a payment processing device and receiving an accessible link as part of a transaction from the financial institution that manages the user's payment account. Secondly, the processing and storage burden that needs to be carried out by the service provider during user validation is reduced, since identifying information of the user simply needs to be obtained, and then forwarded on to another entity; and the returned information enables the service provider to decide whether to provide access to the digital asset or service. The service provider therefore does not need to store user information for validation purposes, and nor does it need to carry out the substantive validation processing; it can outsource this storage- and processing- intensive task to a remote system.

In other words, the service provider can benefit from the more sophisticated `KYC' (Know Your Client) analytics and fraud detection tools that are maintained and used by the financial institutions during the user validation process. The service provider is thereby able to reduce the processing work that it has to do, whilst nevertheless improving the user validation. Also in certain cases, some `KYC's may be linked to a payment device / card, which inherently has a robust personality check inbuilt before it can be used.

Furthermore, the service provider can provide and activate the digital credential in two distinct steps, whereby the activation is contingent on the result of the user validation request but the initial step of allowing the user to download the credential can be performed automatically via access of the link.

The digital asset or service may include or relate to one or more of the following: telecommunications services; and/or a digital access pass or device. In the case of telecommunications services, the digital credential may correspond to an eSIM or to another similar device that can be used to access telecommunications services. In the case of digital access passes / devices, the digital credential may correspond to digital key functionality (e.g., a hotel room key) or to digital access functionality (e.g., a concert or travel ticket).

In some embodiments, the financial institution maintains a payment account of the user that is used for the purchase of the digital asset or service.

In other words, it is the (issuer) financial institution that handles the user's payment account which carries out the method and which is involved in the substantive processing and validation of the user information. This means the financial institution can use some or all of the stored user information that it already has access to, as a result of other checks that it has carried out in relation to the user identity validation (and which are performed in relation to other transaction processing aspects), to provide this out-sourced validation service to the service provider.

Alternatively, the financial institution may be associated with a merchant that is operating the payment processing device. In this instance, the (acquirer) financial institution may then also communicate with one or more additional remote systems / servers to provide the validation result - e.g., to obtain the stored information used for comparison with the received user identifying information. Still further alternatively, the financial institution may be a third party (i.e., not the issuer or the acquirer, but potentially a switch or other entity in the transaction architecture) with the appropriate trust relationships to perform the validation request on behalf of the service provider.

In some embodiments, the validation result is indicative of a trust or confidence level / score of the user. In dependence on the trust level satisfying at least one trust criterion, the service provider may then be configured to enable access of the digital asset or service to the user.

The financial institution is able to provide a trust score to the service provider, for example based on a scoring system agreed beforehand between the financial institution and the service provider. The trust score can be assessed by the service provider to determine whether there is sufficient confidence in the user, and more specifically sufficient confidence in the validity of the identifying information provided by the user, such that the service provider can trust the user to use the digital asset or service.

In some embodiments, after providing the first link to the user device: the method may further comprise transmitting, to the service provider, a first identifier associated with the first link and a second identifier associated with the user. In certain instances, the user validation request may further comprise the second identifier.

The use of these identifiers allows the service provider to match the digital credential which has been purchased by the user device, to the user details when they access the link to obtain the corresponding credential and provide their identifying information. These identifiers also allow the financial institution to identify the user that is being validated.

In some instances, after providing the link to the user device, the method may further comprise transmitting, to the service provider, the first link and a second link to an (dedicated) interface of the financial institution for use by the service provider to transmit the user validation request.

The financial institution can thereby provide a dedicated link to an interface (e.g., a link to a validation request API) that can direct the service provider to the correct incoming processing pipeline for user validation. This improves the ease with which the service provider can access the user validation service.

In some instances, the payment processing device corresponds to one of the following: an Automated Teller Machine `ATM', a Point of Sale 'POS' terminal, or an online payment gateway. A user payment device, used by the user for generating the transaction request, may correspond to one or more of the following: a payment card, a digital wallet or application associated with a payment account maintained by the financial institution.

The user may therefore use one of the above combinations of payment options to obtain access to the digital asset and/or service, without necessarily needing to go through the usual channels, e.g., to a merchant that sells those services or to the service provider via an online gateway. The user can simply make a payment for the service using standard transaction processing devices that they are familiar with, and which would be more easily accessible to them regardless of the time or location.

In some embodiments, the first accessible link corresponds to a QR code, a barcode, or a URL that is associated with the digital asset or service. In more detail, the first link may be generated by the service provider and may be unique to the specific digital credential. The first link may therefore allow the user to access the service provider system and obtain (e.g., via download) the digital credential.

In another aspect, the disclosure provides a computer implemented method of providing access for a user to a digital asset and/or service. The method is performed by a service provider and follows a transaction request submitted to a financial institution indicative of the user requesting access to the digital asset and/or service. The method comprises receiving, from the user via a first accessible link, a request to obtain an associated digital credential configured to enable access to the digital asset and/or service when activated, whereby the first link was obtained by the user from the financial institution in the transaction request. The method may further comprise requesting, from the user, identifying information of the user and transmitting, to the financial institution, a user validation request comprising the identifying information of the user. The method further comprises receiving, from the financial institution, a validation result, based on a comparison of the received identifying information of the user with stored user information; and activating, in dependence on the validation result indicating successful user validation, the digital credential to enable the user to access the digital asset and/or service.

As noted above, the processing and storage burden that needs to be carried out by the service provider during user validation is reduced. Identifying information of the user simply needs to be obtained from the user and then forwarded on to another entity (in this case the financial institution). Moreover, the returned information straightforwardly enables the service provider to decide whether to provide access to the asset and/or service. The service provider does not need to securely store potentially sensitive user information for validation purposes, and nor does it need to carry out the substantive validation processing; it can outsource this storage- and processing- intensive task to a remote system. Furthermore, the service provider can provide and activate the digital credential in two distinct steps, whereby the activation is contingent on the result of the user validation request but the initial step of allowing the user to download the credential can be performed automatically via access of the link.

The digital asset or service may include or relate to one or more of the following: telecommunications services; and/or a digital access pass or device. In the case of telecommunications services, the digital credential may correspond to an eSIM or to another similar device that can be used to access telecommunications services. In the case of digital access passes / devices, the digital credential may correspond to digital key functionality (e.g., a hotel room key) or to digital access functionality (e.g., a concert or travel ticket). The financial institution may maintain a payment account of the user that is used for the purchase of the digital asset or service.

In some embodiments, the validation result is indicative of a trust level of the user, wherein the trust level satisfying at least one trust criterion is indicative of successful user validation.

In some embodiments, the method may further comprise receiving, from the financial institution, a first identifier associated with the first link and a second identifier associated with the user. The user validation request may further comprise the second identifier.

In some embodiments, the method may further comprise receiving, from the financial institution, the first link and a second link to an interface of the financial institution for use when transmitting the user validation request.

In another aspect, the disclosure provides a financial institution system configured to provide access for a user to a digital asset and/or service from a service provider. The system may comprise one or more processors that are collectively configured to: receive, from a payment processing device, a transaction request indicative of the user requesting access to the digital asset and/or service; and provide, to the user, a first accessible link associated with a digital credential which is configured to enable access to the digital asset and/or service when activated. The one or more processors may be collectively configured to receive, from the service provider and following access of the first link by the user, a user validation request comprising identifying information of the user, wherein the identifying information was obtained by the service provider following access of the first link by the user. The one or more processors may be collectively configured to provide, to the service provider, a validation result, based on a comparison of the received identifying information with stored user information, so as to enable the service provider to determine whether to activate the digital credential and enable access of the digital asset and/or service.

In another aspect, the disclosure provides a service provider system configured to provide access for a user to a digital asset and/or service The system may comprise one or more processors that are collectively configured to, following a transaction request submitted to a financial institution indicative of the user requesting access to the digital asset and/or service: receive, from the user via a first accessible link, a request to obtain an associated digital credential configured to enable access to the digital asset and/or service when activated. The first link may have been obtained by the user from the financial institution. The one or more processors may be collectively configured to request, from the user, identifying information of the user; and transmit, to the financial institution, a user validation request comprising the identifying information of the user. The one or more processors may be collectively configured to receive, from the financial institution, a validation result, based on a comparison of the received identifying information of the user with stored user information; and to activate, in dependence on the validation result indicating successful user validation, the digital credential to enable the user to access the digital asset or service.

The digital asset or service may include or relate to one or more of the following: telecommunications services; and/or a digital access pass or device. In the case of telecommunications services, the digital credential may correspond to an eSIM or to another similar device that can be used to access telecommunications services. In the case of digital access passes / devices, the digital credential may correspond to digital key functionality (e.g., a hotel room key) or to digital access functionality (e.g., a concert or travel ticket). The service provider may correspond to a telecommunications service provider, an access service provider, a travel service provider or an accommodation service provider, for example.

It will be appreciated that similar benefits and advantages will be associated with the systems and devices implementing these methods as were described previously in association with the methods. In addition, corresponding additional (optional) features set out in respect of the above-described methods would also be equally applicable in respect of the respective systems and devices.

Within the scope of this application it is expressly intended that the various aspects, embodiments, examples or alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### Description of Specific Embodiments

Specific embodiments of the disclosure are now described, by way of example, with reference to the accompanying drawings, of which:
**Figure 1** shows a general approach adopted by elements of the disclosure in addressing technical problems associated with managing the provision and access of digital assets and/or services to a user;
**Figure 2** illustrates elements of a complex distributed system adapted to implement a distributed transaction architecture;
**Figure 3** shows schematically an exemplary system arranged to provide user access to telecommunications services, the system being arranged for use with the distributed transaction architecture of Figure 2;
**Figure 4** illustrates an exemplary flow for providing access to the telecommunications services according to aspects of the disclosure and using the system of Figure 3;
**Figure 5** illustrates additional detail of the steps of the flow of Figure 4 when implemented in relation to a specific example; and
**Figure 6** provides an illustrative example of the information that is communicated between a financial institution and a telecommunications service provider according to aspects of the disclosure and using the system of Figure 3.

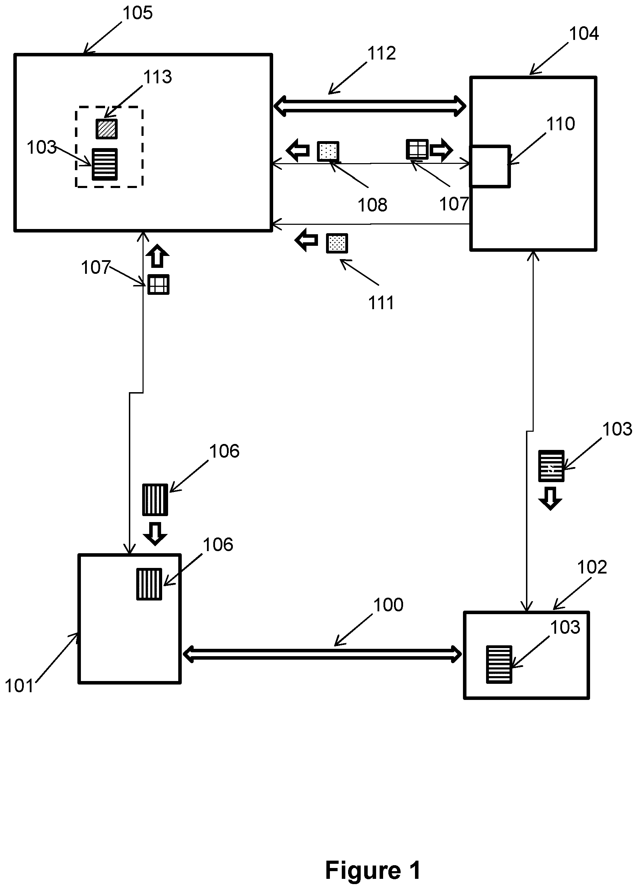

In general terms, the problem addressed by the disclosure and the solution employed by embodiments of the disclosure is illustrated in **Figure 1****.**

An interaction 100 is carried out by a user in order to gain access to digital assets and/or services, for example to telecommunications services, or to an access pass or device such a key or ticket. The interaction 100 involves a user (payment) device 101 and a payment processing device 102. As part of the interaction 100, and specifically in response to a transaction purchase that is initiated by the user, a first link 103 associated with the desired digital assets and/or service (hereafter collectively simply referred to as a 'digital service' for simplicity) is obtained by the user device 101 from the payment processing device 102. The purchase may be carried out via the user device 101 if it comprises payment functionality (e.g., a mobile device comprising a digital wallet / payment application). Alternatively, the purchase may be carried out by a separate payment device that is not shown (e.g., a payment card). The payment processing device 102 may correspond to a merchant POS (`Point of Sale') terminal, an ATM (Automated Teller Machine) or to an online payment or e-commerce gateway.

This first link 103 is obtained by the payment processing device 102 from an associated financial institution 104. The first link 103 is then accessed or otherwise used by the user device 101 during subsequent communications with a service provider 105 to gain access to the desired digital service. The first link 103 may correspond to a QR code, barcode, or any other unique identifier encoding information that allows the user device 101 to access a webpage or other communication interface that is associated with the service provider 105. The user device 101 thereby utilises the first link 103 to communicate with the service provider 105, and to obtain a digital credential 106 from the service provider 105. Once activated, this digital credential 106 will allow the user to access the telecoms services. In examples relating to telecommunications services, the digital credential 106 in question corresponds to a digital sim card (or 'eSIM'). In examples relating to digital access passes / devices, the digital credential 106 in question may correspond to a hotel key or concert ticket.

Prior to activation of the digital credential 106, the service provider 105 performs a user validation process (e.g., `KYC' checks) using identifying information 107 obtained from the user. The service provider 105 outsources the substantive validation processing to the financial institution 104 by transmitting the received user identifying information 107 onwards to the financial institution 104 in a user validation request. The financial institution 104 compares the received identifying information 107 against stored information associated with the user, and returns a validation result 108 to the service provider 105. The stored information may be stored by the financial institution 104, or may be obtained from a third party with appropriate trust relationships. This validation result 108 is then assessed by the service provider 105 to determine whether it indicates that there is sufficient trust in the user for a successful user validation to be considered to have taken place. For example, the validation result 108 may correspond to a trust or confidence level, and may be evaluated against a criterion or score predefined by the service provider 105 to be indicative successful user validation. Thereafter, the service provider 105 activates the digital credential 106 in the user device 101 and the user is able to access the digital service as desired.

The user is thereby able to efficiently, straightforwardly and flexibly obtain a digital credential that allows them to access digital assets and/or services. Moreover, the service provider 105 is able to maintain a level of confidence in the user, via user validation, without undertaking undue storage and processing burdens.

In order to streamline the user validation process, the financial institution 104 establishes a communications interface 110 (e.g., an API) that can be used by the service provider 105 to communicate the user validation request to the financial institution 104. The financial institution 104 may also transmit a second link 111 (e.g., an identifier / link of the API 110) to the service provider 105, following the purchase and provision of the first link 103 by the user. The second link 111 can be transmitted along with an indication of the first link 103, such that the service provider 105 will know which link 103 (and hence which corresponding digital credential 106) has been allocated to the user. The second link 111 thereby provides a mechanism to validate the user for that specific purchase.

Returning to an earlier stage of the overall process, the first link 103 is obtained by the financial institution 104 from the service provider 105 in a prior provisioning process 112. In this process, a plurality of available first links 103 were assigned to the financial institution 104 based on the understanding that the first links 103 are provided under an `resale' agreement with the financial institution 104. Each first link 103 may be associated with a unique identifier 113, such that both the financial institution 104 and the service provider 105 can easily identify the specific link that is allocated to the user subsequently, and ensure that it is processed appropriately by both parties. The allocation of the unique link identifier 113 also minimises the possibility of the same link being allocated to different users.

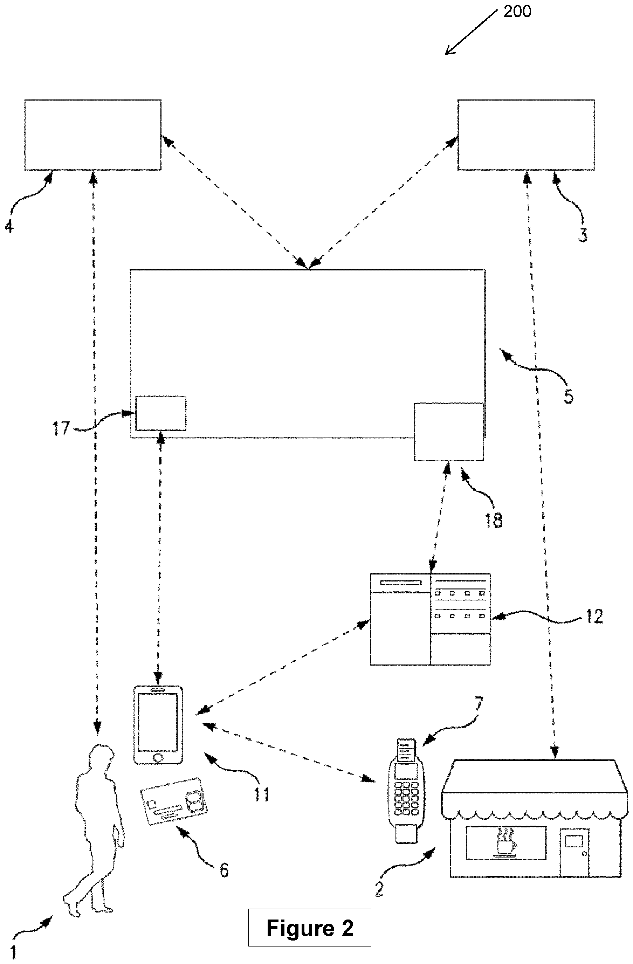

Some specific implementations in relation to the access to telecommunications services will now be described in more detail in the context of a transaction infrastructure. A suitable transaction infrastructure will first be described in more detail in order to provide a basis for understanding the processing improvements that are provided in this context. **Figure 2** is a block diagram showing this transaction infrastructure architecture.

A cardholder 1 purchases goods or services from a merchant 2. An issuer 3 is the bank or any other financial institution maintaining a payment account of the cardholder, and which issued a card or other payment product to the cardholder 1 in association with that payment account. An acquirer 4 is the bank or any other financial institution providing services for card processing to the merchant 2. A central transaction scheme infrastructure or 'switch' 5 provides the computing infrastructure necessary to operate the card scheme and provide routing of transactions and other messaging to parties such as the acquirer 3 and the issuer 4. The switch 5 enables the merchant 2 associated with one particular bank acquirer 4 to accept payment transactions from a cardholder 1 associated with a different bank issuer 3.

The cardholder 1 will use their payment card 6 - or a mobile computing device such as smartphone 11 adapted for use as a contactless payment device - to transact with a POS terminal 7 of the merchant 2. Additionally, in some embodiments relevant to the present disclosure, the cardholder will use his or her computing device to act either as a proxy for a physical payment card 6 or as a virtual payment card operating only in a digital domain. The computing device which may be any or all of a cellular telephone handset, a tablet, a laptop, a static personal computer or any other suitable computing device (here cellular telephone handset or smartphone 11 is shown); and other computing devices such as a smart watch or other wearable device may also be used. Where the smartphone 11, is used payment functionality may be achieved with a mobile payment application and a digital wallet. The smartphone 11 can use these to transact with a merchant POS terminal 7 using NFC or another contactless technology, or to make a payment in association with its wallet service as discussed below. Additionally or alternatively, for a remote transaction, the smartphone 11 or one of the other computer devices described above may also be able be able to interact with a merchant server 12 representing the merchant 2 over any appropriate network connection, such as the public internet - the connection to the merchant may be provided by an app or application on the computing device.

The transaction scheme infrastructure (hereafter simply referred to as 'transaction infrastructure') 5 here also provides a wallet service / server 17 to support a digital wallet on the cardholder computing device; optionally, an internet gateway 18 is also provided to accept internet-based transactions for processing by the transaction infrastructure. This internet gateway 18 may be provided by a payment service provider, and in some arrangements the merchant 2 may interact with an internet gateway rather than directly with the acquirer 3. In other embodiments, the wallet service / server 17 may be provided similarly by a third party with an appropriate trust relationship with the transaction scheme provider.

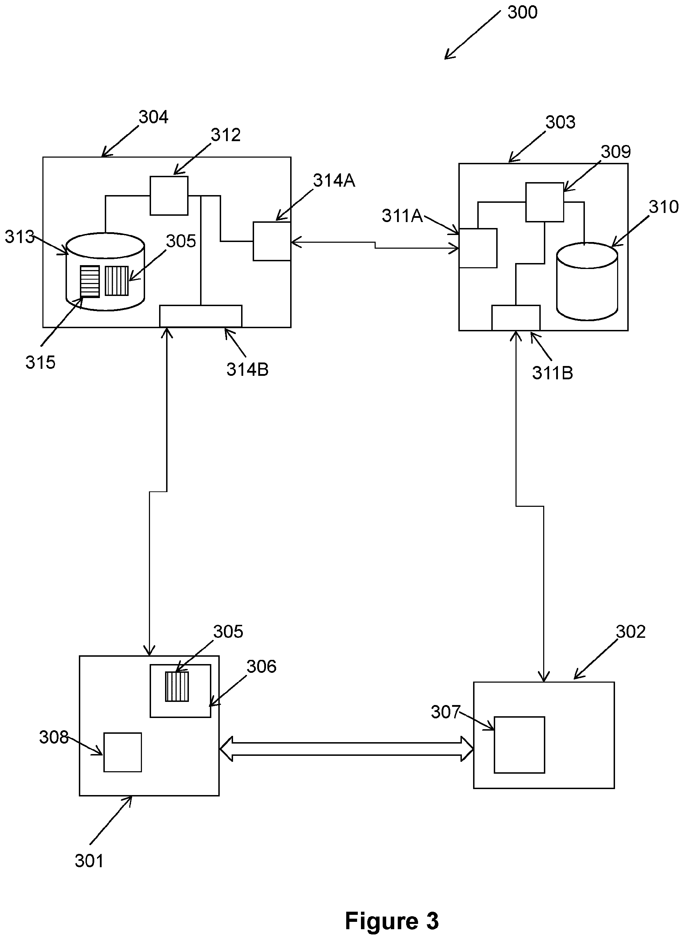

**Figure 3** is a block diagram illustrating a system 300, where the computing system entities communicate with one another, according to embodiments of the disclosure, for the purpose of obtaining and activating a digital credential that enables access to a digital asset and/or service. More specifically, the digital credential corresponds to a digital SIM (or 'eSIM'), that enables access to telecommunications services for the user.

The system 300 comprises a user (mobile) device 301, a (merchant) payment processing device 302, at least one financial institution 303 and a telecoms service provider 304. The user device 301 is configured to carry out a transaction interaction with the payment processing device 302 for the purpose of purchasing one or more digital credentials 305 that enable a user to access telecommunications services (hereafter referred to simply as 'telecoms services' for simplicity). In the examples envisaged herein, these digital credentials correspond to digital SIM cards - i.e., 'eSIMs'. The term eSIM will also be used hereafter, in place of the more generic term 'digital credential', for ease of illustration in relation to the associated figures.

Referring back to Figure 2, the user device 301 is associated with the cardholder 1 (customer) and is used by them to carry out transactions. In the illustrated example, the user device 301 corresponds to a mobile computing device (such as smartphone 11) that is adapted for use as a contactless payment device or as a remote (online) payment device. The user device 301 therefore includes an operating system 306 comprising at least one processor and associated memory (not shown) within which one or more digital applications and/or digital wallets (not shown) are installed and operational to provide the payment processing functionality described earlier in relation to Figure 2. The operating system 306 also comprises the appropriate functionality to support the processing associated with implementing the eSIMs. In the illustrated example, the payment processing device 302 may correspond to the merchant POS terminal 7, or may correspond to the merchant server 12 in the case of remote (online) transactions.

In some example implementations, it is envisaged that both a physical payment card 6 and a mobile computing device such as the smartphone 11 may be utilised in tandem by the user to gain access to the telecoms services. More specifically, the user may make use of the physical payment card 6 to carry out the transaction interactions with the payment processing device 302 which result in the purchase an eSIM 305. However, the resulting eSIM 305 would ultimately be download to and implemented on their smartphone 11. In such implementations, it is envisaged that the payment processing device 302 may also correspond to an ATM (Automated Teller Machine). Additionally or alternatively, it is noted that the user device 301 may correspond to two different mobile computing devices used in tandem - for example, where one computing device is used for a transaction interaction to purchase the right to use the eSIM 305, but the eSIM 305 is actually intended for use by a different device. In other words, it is possible for the user device 301 to correspond to a combination of different types of devices, which together achieve the desired end result of allowing the user to gain access to the eSIM 305.

For simplicity, in the following description, the user device 301 will be assumed to correspond to a mobile computing device having digital payment functionality installed thereon substantially as described above. It will also be assumed that the user device 301 is the intended recipient of the e-SIM 305.

The eSIMs 305 are obtained by the user device 301 following a transaction interaction between the user device 301 and the payment processing device 302. As such, the payment processing device 302 comprises a communications interface 307 that the user and their user device 301 may interact with during the transaction - for example, a display or other graphical user interface. Additionally, the user device 301 also comprises at least one communications interface or module 308 which is used to receive user input, and to display information to the user. The communications interface 308 may also comprise image capture functionality (e.g., it may encompass both the display touchscreen and camera of the mobile computing device).

The financial institution 303 comprises at least one processor 309 and operatively coupled memory 310 to implement storage and processing functionality substantially as described hereinafter. The financial institution 303 also further comprises at least one communications interface or module 311A that is configured to enable communication between the financial institution 303 and the telecoms provider 304 (for example, for the purposes of data exchange in relation to user validation). An additional communication interface or module 311B is also provided which allows communication of information with the payment processing device 302 (e.g., when allowing the user to purchase the eSIM 305). With reference to Figure 2, the financial institution 303 may correspond to the acquirer 3, or to the issuer 4; or, in the case where the payment processing device 302 corresponds to an ATM, the financial institution 303 may simply correspond to the ATM-honouring bank.

The telecoms provider 304 also comprises at least one processor 312 and operatively coupled memory 313 to implement storage and processing functionality substantially as described hereinafter. Furthermore, the telecoms provider 304 also comprises at least one communications interface or module 314 that is configured to enable communication with the financial institution 303 (for example, to enable the exchange of telecommunications service data); and another communication interface or module 314B that is configured to enable communication with the user device 301.

The telecoms provider 304 is arranged to store (e.g., in storage 313) a plurality of links, codes or other identifiers 315, each link being associated with an eSIM 305. The link 315 may take the form of any one of a QR code, barcode, or other coded identifier, that is capable of embedding a user-accessible link which, upon access by the user, enables the download of an eSIM 305 to the user device 301.

In response to receiving a transaction request message for purchase of an eSIM 305, the financial institution 303 is configured to obtain the associated link 315 from the telecoms provider, and provide this link 315 to the user device 301 via the payment processing device 302. The telecoms provider 304 can use the communications interface 314A (for example, in the form of a dedicated API) to communicate information (and specifically the links 315) to the financial institution 303. The communications interface 307 of the payment processing device 302 can be used to communicate the link 315 to the user device 301. For example, where the link 315 corresponds to an eSIM QR code, the interface 307 is configured to display the QR code and the user device 301 can scan or otherwise capture the QR code to access the functionality embedded therein using the interface 308.

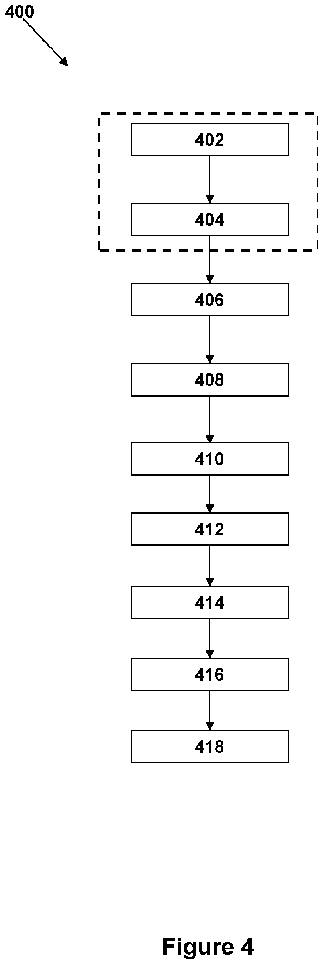

A more detailed discussion of how the entities in the system 300 can be used to provide telecoms services access (and specifically access to an eSIM), will now be provided with detailed reference to **Figures 4****,** **5 and 6****.**

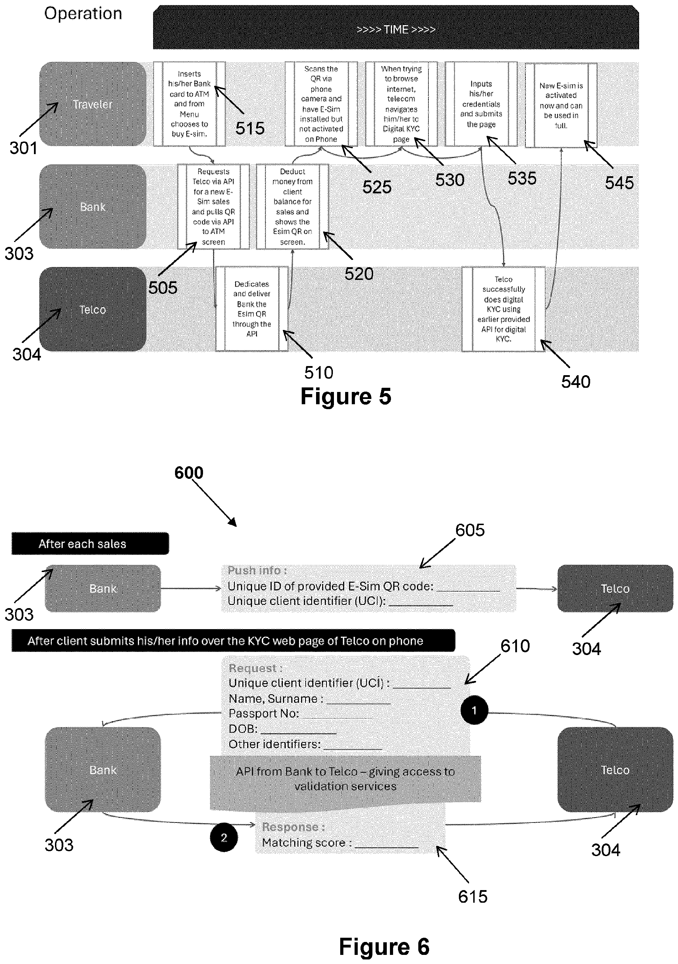

**Figure 4** provides an overview of a processing flow 400 that is implemented by the user device 301, the payment processing device 302, the financial institution 303 and the telecoms provider 304, in order to allow the user to gain access to telecommunications services. **Figures 5** illustrates details of how the flow 400 would be implemented if the payment processing device 302 was an ATM; while **Figure 6** illustrates examples of messages that would be exchanged between the financial institution 303 and the telecoms provider 304 during the flow 400.

The substantive process 400 of a customer (cardholder 1) obtaining access to a telecoms service actually begins in step 406 when the customer makes a request for access of telecommunications services. This is implemented via interaction of the user device 301 with the payment processing device 302. More specifically, this access request may involve a request to enact a transaction for the purpose of purchasing an eSIM. However, prior to this substantive process, the financial institution 303 and the telecoms provider 304 carry out processing and exchange information (in steps 402 and 404) in order to enable the rest of the process 400 to take place.

In step 402, the telecoms provider 304 identifies a set of eSIMs (i.e., digital credentials 305) that the financial institution 303 will be permitted to sell onwards to customers as part of a resale agreement between the telecoms provider 304 and the financial institution 303. The telecoms provider 304 then derives, determines or assigns, in step 404, a corresponding eSIM QR code (i.e., link 315) for each of the identified eSIMs in the set.

These eSIMs and their corresponding QR code links 315 are typically retained in storage of the telecoms provider 304 (e.g., in memory 313). The QR code links 315 are subsequently transmitted to the financial institution, via the communications interface 314A (provided in the form of a dedicated API) on-demand - i.e., upon request from the financial institution 303, and following the transaction interaction between the user device 301 and the payment processing device 302. This is illustrated in steps 505 and 510 of Figure 5. However, it is alternatively envisaged that as part of step 404 the financial institution may instead be provided with the set of eSIMs and their corresponding QR codes, for storage in memory 310 for example, as part of a provisioning process. In this manner, no communications with the telecoms provider 304 in this regard need to be carried out during the transaction.

Thereafter, the substantive process of the customer requesting access to a telecommunications service continues in step 406 and using the user device 301. For example, as illustrated in steps 505, 510 and 525 of Figure 5, the customer interacts with a payment processing device 302 in the form of an ATM and the user device 301 corresponds to a payment card that is inserted into the ATM. A menu that would include the option to purchase an eSIM would be displayed on a display screen of the ATM (corresponding to the communications interface 107).

Alternatively, it is envisaged that the customer may interact with a payment processing device 302 in the form of a merchant POS terminal 7. This may form part of a transaction request for purchase of other goods or services, or may be a stand-alone request for an eSIM alone. A similar menu to that described in relation to the ATM could be used to allow the customer to select the 'purchase eSIM' option. The user device 301 may again correspond to the user's physical payment card, or to a digitised version of the payment card maintained in a digital wallet / application in the user's mobile device (e.g., smartphone 11). As a further alternative, it is envisaged that the customer may interact with a payment processing device 302 in the form of an online (Internet) gateway to a merchant (and their remote server 12). In this interaction, the user device 301 may again take the form of a mobile device of the user (e.g., smartphone 11) containing a digital proxy of the user's payment card.

The process then continues in step 408 where the payment processing device 302 and the financial institution 303 communicate with one another (and with the telecoms provider 304, as noted above) to process the transaction request and to provide the corresponding eSIM QR code link 315, to the user device 301. In this step, the payment processing device 302 (whether in the form of an ATM, POS terminal, or online gateway) communicates with the financial institution 303 in question to obtain the eSIM QR code. The payment processing device 302 then displays the QR code to the customer, typically via the display screen that was used to make the original purchase request. The customer is able to scan the displayed eSIM QR code link 315 with their user device 301. The QR code link 315 is programmed such that this results in the eSIM (or code corresponding to the eSIM functionality) being downloaded to and installed within the operating system 306 of the user device 301. As part of this process, the financial institution 303 may communicate with the telecoms provider 304 to request the eSIM QR code, for example via the dedicated API communications interface 314A of the telecoms provider. This process may be driven by the financial institution 303, which `pulls' (submits a request for) a new QR code link 315 to the API interface 314A in response to receiving the transaction request from the user device 301 via the payment processing device 302.

To complete the transaction request, as shown in step 520 of Figure 5, the financial institution 303 may also deduct money from a payment account of the customer corresponding to the payment card / device used to purchase the eSIM. At this point however, although the customer is in possession of the eSIM functionality, the eSIM remains inactive and its functionality cannot be utilised without the customer completing some further actions. This is illustrated in step 525 of Figure 5.

Following completion of the transaction, the financial institution 303 communicates yet again with the telecoms provider 304 in step 410. More specifically, as shown in Figure 6, the financial institution 303 transmits a transaction confirmation message 605 to the telecoms provider 304 comprising information relating to the recent eSIM purchase. As shown in Figure 6, this information includes a first identifier corresponding to an identifier of the eSIM QR code link, to allow the telecoms provider 304 to confirm which eSIM has been allocated to a specific customer. The transaction confirmation message 605 also includes an identifier of the customer (shown as the 'unique client identifier or UCI' in Figure 6) such that the eSIM and QR code that have been purchased are associated with that particular customer entity. Additionally, the financial institution 303 transmits to the telecoms provider 304 a second identifier which corresponds to an identifier of a link to the communications interface 311A, and specifically to a dedicated API that is used subsequently for processing user validation requests. This second identifier may be transmitted in step 410, and/or within the transaction confirmation message 605.

Alternatively, the second identifier may be transmitted earlier in the process, for example during steps 402 and/or 404.

The next step 412 corresponds to the beginning of a user validation process that is typically triggered by the customer attempting to use their user device 301 to access the telecommunications service provided by the eSIM. For example, as illustrated in step 530 of Figure 5, the triggering event may involve the customer attempting to browse the internet on their user device 301. Such an event automatically results in the customer being navigated to a user validation interface that is hosted / managed by the telecoms provider 304 (e.g., a digital KYC page). This may be displayed to the customer via the communications interface 108 on their user device 301.

As part of step 412, the customer is prompted to input identifying (personal) data / information 107 about themselves which can be used for validation (`KYC' - Know Your Client) checks by the telecoms provider 304. This identifying information may include, but is not limited to, the customer's name, contact information, date of birth, passport or other ID information, and/or a digital image of the customer's ID. This is illustrated in step 535 of Figure 5.

The process 400 then proceeds to step 414 where the telecoms provider 304 collates the information that is obtained from the customer, and formulates a user validation request message 610 which includes some or all of the identifying information that was input by the user. The user validation request message 610 is transmitted to the financial institution 303, for example via the communications interface API 311A; and using the identifier of the link to the API that was originally transmitted to the telecoms provider 304 by the financial institution 303 (i.e., the second identifier referenced above). As shown in Figure 6, the user validation request message 610 also includes the identifier of the customer (the `UCI') that was originally transmitted to the telecoms provider 304 by the financial institution 303. This allows the financial institution 303 to identify which customer is being validated, and hence which piece(s) of stored identifying information should be retrieved in order to perform the user validation.

Thereafter, in step 416, the financial institution 303 carries out customer validation based on the received identifying information 107 in the user validation request message 610.

For example, by comparing the receiving identifying information with stored data that corresponds to the customer. This stored data may be maintained by the financial institution 303 itself, or may be maintained by a third party with the appropriate trust relationships. For example, the financial institution 303 may first perform this comparison based on any data that is stored 'internally' by the financial institution itself. Thereafter, if the appropriate information required for the comparison is not found, the financial institution 303 may then access data stored by, or transferred under separate agreements from, other third parties. A user validation result is then returned by the financial institution 303 to the telecoms provider 304. In some cases, this result takes the form of a confidence score or trust level of the customer, based on the degree to which the identifying information received from the telecoms provider 304 matches the stored data.

The process terminates in step 418, where the telecoms provider 304 has received the user validation result from the financial institution 303 and determines, in dependence on the validation result, whether to activate the eSIM functionality for the customer. This is illustrated in step 540 of Figure 5. Specifically, the telecoms provider 304 decides to activate the eSIM functionality in dependence on the validation result indicating that the customer has been deemed to be sufficiently trustworthy. For example, the financial institution 303 may provide a certain confidence or trust level / score to the telecoms provider 304 as the validation result, and the telecoms provider 304 may then consider the customer to be sufficiently trustworthy if this score or level received is at or above a predefined threshold, matches a predefined value or lies within a predefined acceptable range. A set of predefined rules may be stored in the memory 313, and used by the processor 312, to allow the telecoms provider 304 to assess the user validation result and determine the appropriate course of action. For example, the financial institution 303 may provide one or more scores to the telecoms provider 304 such as: 'Overall match score', 'Name-surname match score', 'Phone number match score', 'Citizenship match score' (e.g., Yes or No); and `Passport number match score'; and so on. Depending on the predefined rules (which may in turn depend on other factors such as the regulations in the country in which the telecoms provider 304 is based), the telecoms provider 304 may then assess the one or more received scores to determine an appropriate course of action. For example, the telecoms provider 304 may define thresholds such as (i) that the 'Name-surname match score' must be 95% or greater; and/or (ii) the 'Phone number match score must be 100%; and/or (iii) the `Passport number match score' must be 95% or greater for the user to be deemed sufficiently trustworthy.

Once the eSIM functionality is activated (as illustrated in step 545 of Figure 5), the customer is informed of this positive result and can access telecoms services via their user device 301. If it is instead decided that the customer is not sufficiently trustworthy, the telecoms provider 304 may return the negative result to the customer; as part of this process, further authenticating information (e.g., via a step-up authentication request) may be requested from the customer.

The above-described systems and methods advantageously simplify the process by which the customer can access eSIM functionality. The flexibility with which the eSIM can be obtained is also increased. For example, many different payment processing devices can be used by the customer to purchase and obtain the QR code link to the eSIM, such that the customer can access telecoms services in a straightforward and easy manner. This increases the reach of telecoms services to customers in different jurisdictions and under a variety of circumstances.

Moreover, by outsourcing the user validation to the financial institution in the manner described above, the telecoms provider is able to minimise the amount of sensitive user information that it handles. The identifying information is received by the telecoms provider, but is then transmitted onwards to the financial institution where the user validation is performed. The processing and storage burden that may otherwise be placed on the telecoms provider is thereby reduced. Furthermore, where the financial institution already holds identifying information of the user for other forms of transaction processing (e.g., where the financial institution is the issuer), the additional burden placed upon the financial institution is reduced as well.

As the skilled person will appreciate, the embodiments described above are exemplary, and further embodiments falling within the spirit and scope of the disclosure may be developed by the skilled person working from the principles and examples set out above.

For example, it is envisaged that the above-described systems and methods would be equally applicable in respect of a variety of digital assets or services, not merely telecoms services.

In one example, it is envisaged that the telecoms provider 304 may be replaced by an accommodation provider such as a hotel entity, and the user may instead be requesting access to a hotel room or apartment. In this example, rather than an eSIM being downloaded to the user device 301, digital hotel room key functionality may instead be downloaded to the user device 301 using a QR code (or other accessible link) that is obtained via interaction with the payment processing device 302. Thereafter, a similar process would take place as described above where the user is required to provide identifying information about themselves, which is validated by the accommodation provider via communication with the financial institution 303, in substantially the same way as described above. If the user is considered sufficiently trustworthy, the digital hotel room key is activated and may be used to access the hotel room.

In another example, it is envisaged that the telecoms provider 304 may be replaced by any other digital asset / service provider, and the user may instead be requesting access to an event or service such as a concert or mode of travel. In this example, rather than an eSIM being downloaded to the user device 301, digital credentials / tickets / passes may be downloaded to the user device 301 using a QR code (or other accessible link) that is obtained via interaction with the payment processing device 302. Thereafter, a similar process would take place as described above where the user is required to provide identifying information about themselves, which is validated by the digital asset / service provider. If the user is considered sufficiently trustworthy, the digital access pass or ticket is activated and may be used to access the event or mode of travel.

## Claims

1. A computer implemented method of providing access for a user to a digital asset or service from a service provider, the method being performed by a financial institution and comprising:
receiving, from a payment processing device, a transaction request indicative of the user requesting access to the asset or service;
providing, to the user, a first accessible link associated with a digital credential which is configured to enable access to the digital asset or service when activated;
receiving, from the provider and following access of the first link by the user, a user validation request comprising identifying information of the user, wherein the identifying information was obtained by the service provider following access of the first link by the user; and
providing, to the service provider, a validation result, based on a comparison of the received identifying information with stored user information, to enable the service provider to determine whether to activate the digital credential and enable access to the digital asset or service.

2. The method of claim 1, wherein the digital asset or service includes one or more of the following: telecommunications services, a digital access pass or device.

3. The method of claim 1 or claim 2, wherein the financial institution maintains a payment account of the user that is used for the purchase of the digital asset or service.

4. The method of any preceding claim, wherein the validation result is indicative of a trust level of the user and;
wherein, in dependence on the trust level satisfying at least one trust criterion, the service provider is configured to enable access of the digital asset or service to the user.

5. The method of any preceding claim, further comprising after providing the first link to the user device:
transmitting, to the service provider, a first identifier associated with the first link and a second identifier associated with the user; and
wherein the user validation request further comprises the second identifier.

6. The method of any preceding claim, further comprising after providing the link to the user device:
transmitting, to the service provider, the first link and a second link to an interface of the financial institution for use by the service provider to transmit the user validation request.

7. The method of any preceding claim, wherein the payment processing device corresponds to one of the following: an Automated Teller Machine `ATM', a Point of Sale 'POS' terminal, or an online payment gateway.

8. The method of any preceding claim, wherein the first accessible link corresponds to a QR code, a barcode, or a URL that is associated with the digital asset or service.

9. A computer implemented method of providing access for a user to a digital asset or service, the method being performed by a service provider and following a transaction request submitted to a financial institution indicative of the user requesting access to the digital asset or service, the method comprising:
receiving, from the user via a first accessible link, a request to obtain an associated digital credential configured to enable access to the digital asset or service when activated, wherein the first link was obtained by the user from the financial institution in the transaction request;
requesting, from the user, identifying information of the user;
transmitting, to the financial institution, a user validation request comprising the identifying information of the user;
receiving, from the financial institution, a validation result, based on a comparison of the received identifying information of the user with stored user information; and
activating, in dependence on the validation result indicating successful user validation, the digital credential to enable the user to access the digital asset or service.

10. The method of claim 9, wherein the validation result is indicative of a trust level of the user and wherein the trust level satisfying at least one trust criterion is indicative of successful user validation.

11. The method of claim 9 or claim 10, further comprising:
receiving, from the financial institution, a first identifier associated with the first link and a second identifier associated with the user; and
wherein the user validation request further comprises the second identifier.

12. The method of any of claims 9 to 11, further comprising:
receiving, from the financial institution, the first link and a second link to an interface of the financial institution for use when transmitting the user validation request.

13. A financial institution system configured to provide access for a user to a digital asset or service from a service provider, the system comprising one or more processors that are collectively configured to:
receive, from a payment processing device, a transaction request indicative of the user requesting access to the digital asset or service;
provide, to the user, a first accessible link associated with a digital credential which is configured to enable access to the digital asset or service when activated;
receive, from the service provider and following access of the first link by the user, a user validation request comprising identifying information of the user, wherein the identifying information was obtained by the service provider following access of the first link by the user; and
provide, to the service provider, a validation result, based on a comparison of the received identifying information with stored user information, to enable the service provider to determine whether to activate the digital credential and enable access of the digital asset or service.

14. A service provider system configured to provide access for a user to a digital asset or service, the system comprising one or more processors that are collectively configured to, following a transaction request submitted to a financial institution indicative of the user requesting access to the digital asset or service:
receive, from the user via a first accessible link, a request to obtain an associated digital credential configured to enable access to the digital asset or service when activated, wherein the first link was obtained by the user from the financial institution;
request, from the user, identifying information of the user;
transmit, to the financial institution, a user validation request comprising the identifying information of the user;
receive, from the financial institution, a validation result, based on a comparison of the received identifying information of the user with stored user information; and
activate, in dependence on the validation result indicating successful user validation, the digital credential to enable the user to access the digital asset or service.

15. The system of claim 13 or claim 14, wherein the digital asset or service includes one or more of the following: telecommunications services, a digital access pass or device.
